# DEMANDE DE BREVET EUROPEEN

(11) **EP 1 672 485 A1**
(43) Date de publication de la demande: **21.06.2006**
(21) Numéro de dépôt: 05292645.8
(22) Date de dépôt: 13.12.2005
(51) Int. Cl.: G06F 9/44

(54) **Système et procédé de développement d'une application interactive, dite téléprocédure, pour la dématérialisation des procédures administratives**

(30) Priorité: 15.12.2004 FR 0413373
(71) Demandeur: Genigraph, 75015 Paris (FR)
(72) Inventeur: Nicolas, Olivier Jacques Alain, 31830 Plaisance-du-Touch (FR)
(74) Mandataire: Pontet, Bernard

(57) **Abrégé**

L'invention concerne un système de développement d'une application interactive, dite téléprocédure, pour la dématérialisation des procédures administratives, notamment en affichant des formulaires à renseigner et en gérant des formulaires renseignés, caractérisé en ce que le système comprend:
- un éditeur graphique interactif doté :
   o d'un module fonctionnel apte à générer une application prototype à partir de données de spécifications fonctionnelles saisies, cette application prototype comprenant une définition de formulaires, une définition de scénario dit "workflow" interactif, une définition de règles métiers, une définition d'un modèle métier et une définition de mode d'interfaçage avec des éléments extemes,
   o d'un module technique apte à générer, à partir de la dite application prototype et de données de spécifications techniques saisies, l'application de téléprocédure, une application d'interfaçage et une application de gestion de la téléprocédure; et
- un moteur apte à exécuter lesdites applications de prototype, de téléprocédure, d'interfaçage et de gestion.

## Description

La présente invention se rapporte à un système et un procédé de développement d'une application interactive, dite téléprocédure, pour la dématérialisation des procédures administratives, notamment en affichant des formulaires à renseigner (front office) et en gérant des formulaires renseignés.

Elle trouve une application particulièrement intéressante dans le domaine dit du e-administration ou administration électronique (e-government en langue anglaise). Toutefois, l'invention est d'un cadre plus large puisqu'elle peut s'appliquer à d'autres domaines, notamment du secteur privé, tels que :
- e-RH : e-Ressources Humaines : gestion des procédures administratives dans les entreprises (feuille de temps ; demande de congés ; feuille de frais...),
- e-Assurance (déclaration de sinistres),
- e-QA : Assurance Qualité : dématérialiser les procédures liées aux certifications qualité (ISO-9001 ; CMM...).

Dans de nombreux pays, les administrations se modernisent en utilisant les technologies Internet. Elles proposent ainsi aux administrés (entreprises, citoyens, employés) de remplir des formulaires en-ligne et d'effectuer des télé-paiements. Par téléprocédure, on entend une dématérialisation de toute procédure administrative incombant aux entreprises ou aux citoyens dans leurs relations avec la sphère publique, et sa transmission par voie électronique pour traitement informatisé par les services de l'Etat.

La téléprocédure permet de réduire les coûts de fonctionnement des services administratifs et les délais de traitements administratifs. Elle permet également aux entreprises d'améliorer leurs relations avec leur clientèle et alléger leur gestion. Ainsi, les compagnies d'assurance peuvent proposer des déclarations de sinistres en ligne, les banques peuvent offrir des télé-déclarations d'opposition de chèques, de demandes de procuration, de demande de chéquiers, de carte de crédit...

On connaît le document US 2004/0187090 "Method and system for creating interactive software", dans lequel on décrit un outil de développement d'application graphique permettant la conception en langage graphique puis la génération d'un code spécifique pour une plateforme donnée. La conception n'est plus dépendante de la plateforme finale d'exploitation. Le document WO 02/086705 "Computer system and method with adaptive n-level structures for automated generation of program solutions", décrit un système permettant le développement d'une application logicielle par des non-programmeurs. Le système propose une interface utilisateur permettant aux non-programmeurs de spécifier des règles, cette interface étant apte à générer un code source qui est ensuite transmis vers un serveur de production. Les règles peuvent être mises à jour parallèlement à la production de l'application finale.

On connaît également l'outil de développement "FlexFoundation™ Developer Studio" de la société EZGOVⓇ visible à l'adresse Internet www.ezgov.com. Cet outil est une plateforme de développement de logiciel destiné à la dématérialisation de procédures administratives. Cependant, il est destiné à être manipulé par des développeurs, ce qui signifie que les services administratifs doivent faire appel à un expert informatique pour la création, la modification et la maintenance de l'application créée.

La présente invention a pour but de réduire le temps de développement et de maintenance corrective et évolutive d'une application logicielle de téléprocédure de façon à en réduire le coût. Un autre but de l'invention est une génération automatique et simplifiée d'une telle application.

On atteint au moins l'un des buts précités avec un système de développement d'une application interactive, dite téléprocédure, pour la dématérialisation des procédures administratives, notamment en affichant des formulaires à renseigner et en gérant des formulaires renseignés. Selon l'invention, le système comprend:
- un éditeur graphique interactif doté :
   - d'un module fonctionnel apte à générer une application prototype à partir de données de spécifications fonctionnelles saisies, cette application prototype comprenant une définition de formulaires, une définition de scénario dit "workflow" interactif, une définition de règles métiers, une définition d'un modèle métier et une définition de mode d'interfaçage avec des éléments externes,
   - d'un module technique apte à générer, à partir de la dite application prototype et de données de spécifications techniques saisies, l'application de téléprocédure, une application d'interfaçage et une application de gestion de la téléprocédure; et
- un moteur apte à exécuter lesdites applications de prototype, de téléprocédure, d'interfaçage et de gestion.

Le moteur offre l'infrastructure logicielle nécessaire à l'utilisation des applications. Il peut également comprendre :
- des moyens de contrôles de données à partir d'un annuaire,
- des moyens d'horodatage,
- des moyens de notarisation et
- des moyens de signature électronique.

Avec le système selon l'invention, les spécifications fonctionnelles sont saisies par un analyste métier qui n'est pas forcément un programmeur informatique, mais un expert maîtrisant les procédures administratives à dématérialiser. C'est notamment par ces spécifications fonctionnelles que la présente invention se démarque des outils existants. Le prototype représente déjà une grande partie de l'application de téléprocédure finale. Ainsi, la grande majorité des problèmes de maintenance peut être réglée par du personnel non expert informatique.

De préférence, les spécifications techniques sont introduites par un programmeur.

L'éditeur graphique est une application interactive à l'ergonomie avancée (Interface Homme-Machine, graphique) permettant de spécifier la téléprocédure. L'application prototype est générée de manière rapide par l'unique intervention de l'analyste métier. Ce prototypage rapide est essentiel dans un domaine où les clients ont souvent des difficultés à exprimer leur besoin et la façon dont une solution informatique peut y répondre. Offrir rapidement un moyen de tester la Téléprocédure avec le prototype permet donc d'offrir du concret au client et autorise ainsi des itérations des spécifications très tôt dans le processus de développement et à moindre frais.

Les spécifications fonctionnelles permettent en particulier de définir :
- le "workflow" interactif, c'est-à-dire la description de l'enchaînement des processus et des écrans de l'application prototype,
- les formulaires, c'est-à-dire la description des écrans permettant de consulter et de saisir les formulaires (inscriptions, déclarations, paiements...) de l'application prototype,
- les règles métiers ("Business Rules" en langues anglaise) qui sont la transcription des spécificités des règles de gestion dans une syntaxe définie,
- des interfaces externes, c'est-à-dire la définition des flux de données externes qui pourront s'interfacer avec l'application prototype, et
- le modèle métier ("Business Meta-Model" en langues anglaise) qui définit les données manipulées par l'application prototype, ce modèle métier pouvant ensuite être personnalisé par le développeur.

En particulier, la définition du workflow consiste à identifier les formulaires, à définir les éléments qui peuvent être saisis ou visualisés via ces formulaires, à définir la navigation entre des formulaires, et à définir des droits d'accès à ces formulaires.

La définition des formulaires consiste à définir le modèle de représentation des données, les règles dynamiques qui dicteront leur édition, des éléments d'Interface Homme Machine qui serviront à les visualiser ou les éditer, des règles syntaxiques ou métiers qui permettront de valider les données saisies et enfin la façon dont elles seront agencées.

Avantageusement, le module technique comprend des moyens pour personnaliser les codes des applications de téléprocédure et de gestion. L'application de téléprocédure peut ainsi être complètement adaptée en fonction des besoins exprimés par le client.

De préférence, le moteur consiste en une application modulaire dont le noyau comporte au moins :
- un composant de gestion du "workflow" interactif,
- un composant de gestion de formulaires,
- un composant de gestion de données métier, et
- un composant de gestion et d'exploitation de la téléprocédure et de l'interfaçage.

Selon une caractéristique de l'invention, le système est intégré au sein d'un système d'information accessible via un réseau de communication de type Internet.

Par ailleurs, les spécifications fonctionnelles et techniques sont établis en format XML respectant une grammaire XML Schema, ceci permettant de rendre notamment les formulaires indépendants du mode de visualisation et d'édition.

Avantageusement, la génération de codes peut être réalisée au sein d'une infrastructure informatique distribuée sur des réseaux informatiques, notamment de type J2EE, .NET ou autre telle que le PHP.

On peut en outre avantageusement définir les règles métiers selon un langage naturel.

Suivant un autre aspect de l'invention, il est proposé un procédé de développement d'une application interactive, dite téléprocédure, pour la dématérialisation des procédures administratives, notamment en affichant des formulaires à renseigner et en gérant des formulaires renseignés, dans lequel :
- on élabore et on valide de façon itérative une application prototype à partir de données de spécifications fonctionnelles saisies, cette application prototype comprenant une définition de formulaires, une définition de scénario dit "workflow" interactif, une définition de règles métiers, une définition d'un modèle métier et une définition de mode d'interfaçage avec des éléments externes, puis
- on génère et on valide, à partir de la dite application prototype et de données de spécifications techniques saisies, l'application de téléprocédure, une application d'interfaçage et une application de gestion de la téléprocédure;
l'étape de validation consistant en l'exécution desdites applications par un moteur.

La présente invention est notamment remarquable par le fait qu'en proposant une première phase de prototypage par un expert métier et une seconde phase de génération du code de l'application finale par un expert informatique, il est désormais possible de réaliser des itérations tôt dans le développement de façon à respecter sûrement et rapidement un cahier des charges.

En particulier, lorsque l'analyste métier est satisfait des spécifications fonctionnelles qu'il souhaite introduire dans la Téléprocédure, le développeur peut générer le code de l'application dans l'infrastructure technique choisie (J2EE ou .NET ou autre infrastructure logicielle distribuée). Il peut ensuite personnaliser le code de l'application en fonction des besoins exprimés en plus des fonctionnalités générées de façon automatique par le prototype.

Au final, trois applications sont développées : l'application de Téléprocédure (Front Office), l'application de gestion de la Téléprocédure (Back Office) et l'application d'interfaçage ou EDI pour Echange des Données Informatiques, qui permet de communiquer avec des systèmes externes.

D'autres avantages et caractéristiques de l'invention apparaîtront à l'examen de la description détaillée d'un mode de mise en oeuvre nullement limitatif, et des dessins annexés, sur lesquels :
- La figure 1 est une vue générale du processus de développement d'une application de téléprocédure au moyen d'un système selon l'invention;
- La figure 2 est une vue schématique des composants constitutifs d'un éditeur graphique selon l'invention;
- La figure 3 est une vue schématique de la mise en oeuvre de l'application de téléprocédure selon l'invention;
- La figure 4 est une vue schématique des composants constitutifs du moteur d'un système selon l'invention;
- La figure 5 est une vue schématique simplifiée détaillant l'architecture multi-couches du moteur d'un système selon l'invention;
- La figure 6 est une vue schématique illustrant un exemple d'intégration du moteur dans une infrastructure de type J2EE; et
- La figure 7 est une vue schématique illustrant les composants de la figure 6 dans un système de réseau distribué.

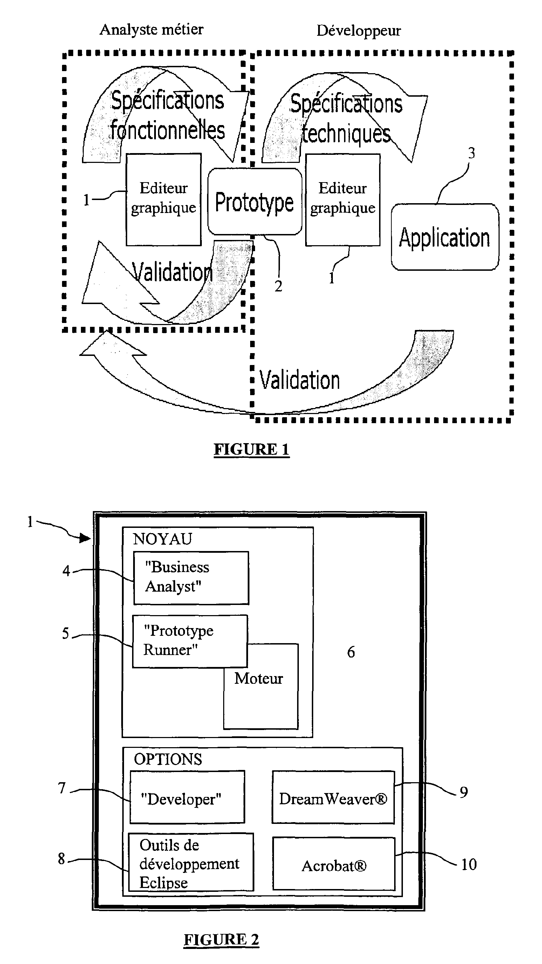

Sur la figure 1, on distingue deux phases. La première phase met en oeuvre un éditeur graphique 1 pour créer un prototype 2 qui est une application définies à partir des spécifications fonctionnelles saisies par un analyste métier. Ce prototype est apte à être exécuté par le moteur (non représenté sur la figure 1) de façon à valider les spécifications fonctionnelles. On répète cette première phase jusqu'à obtenir le prototype souhaité. Lorsque le prototype 2 est correctement défini, on passe à une seconde étape où un développeur informatique saisies des spécifications techniques de sorte que l'éditeur graphique 1 génère le code de l'application de téléprocédure 3. Le développeur peut également personnaliser cette application. Le moteur exécute ensuite l'application de téléprocédure de façon à valider son bon fonctionnement. Les deux phases sont avantageusement réalisées de façon itérative. Les spécifications fonctionnelles et techniques permettent la création d'une interface graphique, d'un mode de navigation et des contrôles standards de l'application de téléprocédure. Ces spécifications sont exprimées internement en XML en respectant des formats définis en XML Schema.

Les spécifications fonctionnelles comprennent notamment la définition d'un workflow interactif, des formulaires et des règles métier.

Le Workflow permet de définir les transitions entre activités (interactives ou processus batch). Il est défini de manière orthogonale à l'application de téléprocédure de façon à clarifier les enchaînements et réduire ainsi les coûts de maintenance logicielle. Ainsi, le Workflow est un contrôleur et un séquenceur d'activités. Il assure l'interface entre l'application de Téléprocédure et le monde extérieur (IHM Web, flux de données EDI, Web Services...).

Le formulaire, ensemble de données tabulaires, est l'élément de base pour visualiser et saisir des données. Un formulaire peut être un ensemble de champs de saisie ou un tableau. Il peut posséder des menus permettant d'interagir avec l'application de téléprocédure. Un formulaire peut être imprimé, visualisé dans divers systèmes de saisie (navigateur HTML, téléphone WAP ou i-Mode) ou envoyé en batch par d'autres systèmes informatiques (EDI, Web Service). Il est validé de manière neutre en utilisant le langage XML ("eXtensible Markup Language") qui permet une visualisation HTML (JSP ou JSF en J2EE, ASP.NET en .NET), XFORMS, une sortie PDF de manière à être imprimé et des transformations diverses (XSLT) pour transcoder des flux externes (entrants et sortants).

Les règles métier sont saisies par l'analyste métier notamment au moyen d'un moteur de règles. Cela permet une saisie et une maintenance des règles métiers en langage naturel et permet de séparer les données métiers de leur comportement associé, facilitant ainsi la maintenance.

Le modèle métier est défini suivant le standard MDA ("Model Driven Architecture" en langue anglaise).

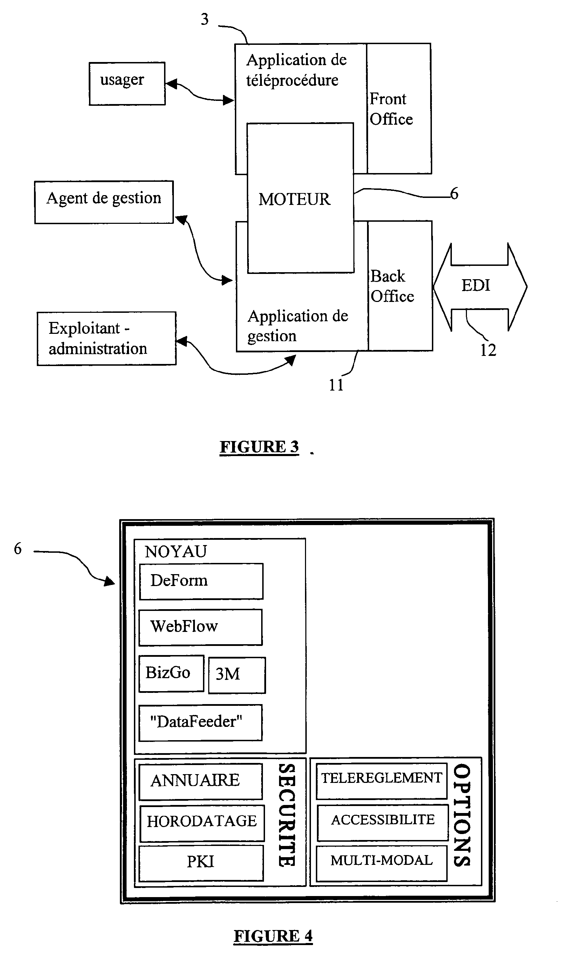

L'éditeur graphique 1 utilisé pour réaliser les deux phases présente une architecture de type modulaire. Sur la figure 2 on voit ses composants internes. L'éditeur graphique selon l'invention est basé sur Eclipse, un environnement de développement java, open-source et extensible ou sur un autre environnement tel que Microsoft Visual Studio ou tout autre environnement de développement. Sur cette base, l'éditeur graphique 1 comprend une extension logicielle ou "plugin" "Business Analyst" 4 permettant de capturer les spécifications fonctionnelles introduites par un analyste métier et de les exécuter par un plugin "Prototype Runner" 5 pour générer le prototype 2. Ce prototype 2 est ensuite exécuté par le moteur 6.

Un autre plugin "Developer" 7 permet au développeur de fournir les spécifications techniques de la téléprocédure et de personnaliser des API Java afin de générer l'application finale.

Le développeur bénéficie de l'environnement intégré d'Eclipse avec en particulier des outils de développement java JDT pour "Java development tools" 8 pour l'édition et la compilation de son code. Enfin, des extensions des éditeurs HTML/JSP (tel que Dreamweaver®) et PDF (tel que AcrobatⓇ) sont proposées afin de parfaire les chartes graphiques des formulaires dématérialisés.

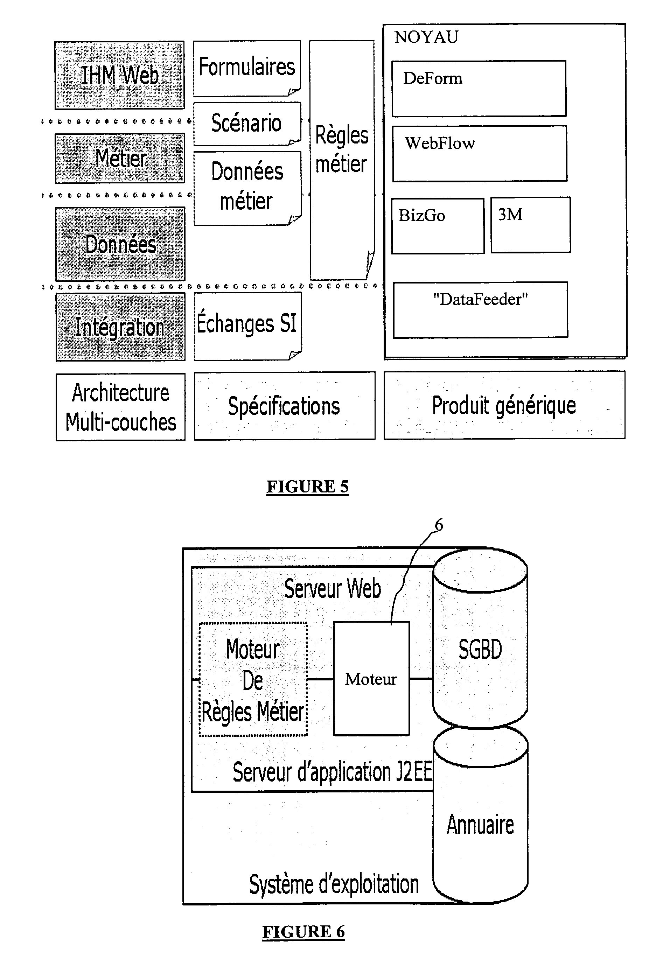

En fait, en même temps que l'on génère l'application de téléprocédure, on génère également une application de gestion et une application EDI. Sur la figure 3, on voit que le moteur 6 permet d'exécuter l'application de téléprocédure 3 correspondant au "front office" et l'application de gestion 11 correspondant au "back office". Un utilisateur accède ainsi à l'application de téléprocédure 3 via Internet ou un autre réseau supportant le protocole http pour renseigner et transmettre des formulaires affichés par l'application de téléprocédure. Un agent de gestion et/ou un exploitant administratif peut accéder à l'application de gestion 11 pour administrer l'application de téléprocédure. L'application EDI 12 permet l'interfaçage avec d'autres systèmes de communication. Les figures 4 et 5 montrent l'architecture modulaire du moteur 6. Ce moteur comporte un noyau avec les composant suivants :
- composant de gestion de Workflow interactif et de processus (WebFlow)
- composant de gestion de formulaires (DeForm)
- composant de gestion de données métier (BizGo)
- composant de gestion et d'exploitation de la téléprocédure (3M) et de l'EDI (DataFeeder).

Ces composants sont articulés en architecture multi-couche (N-tier), chaque couche gérant un ou plusieurs éléments de spécification comme on peut le voir sur la figure 5. On distingue quatre couches telles que : une interface homme-métier Web, une couche Métier, une couche Données, une couche Intégration. Au niveau des spécifications, on distingue les éléments suivants : formulaires, scénario, données métier, règles métier et échanges Systèmes d'Information.

Le moteur 6 comprend par ailleurs des services transversaux de sécurité :
- identification, authentification, gestion des rôles via un Annuaire,
- horodatage et notarisation des saisies de formulaires,
- signature électronique à base d'une interface à clé publique PKI.

Enfin, comme représenté sur la figure 4, le moteur 6 comprend également des composants optionnels pour gérer le télérèglement, l'accessibilité aux handicapés et l'accès multi-modal par d'autres types de terminaux (téléphones portables, PDA...). Ces briques optionnelles peuvent être fournies par des éditeurs tiers.

Sur la figure 6, on voit un exemple d'intégration du moteur 6 dans une infrastructure de type J2EE. Ce moteur est déployé dans un serveur d'application couplé à un serveur Web. Il utilise une base de données (relationnelle ou orienté objet) et un annuaire LDAP. Il peut également utiliser un moteur de règles. Ces éléments sont supportés par un système d'exploitation qui les interface avec le matériel.

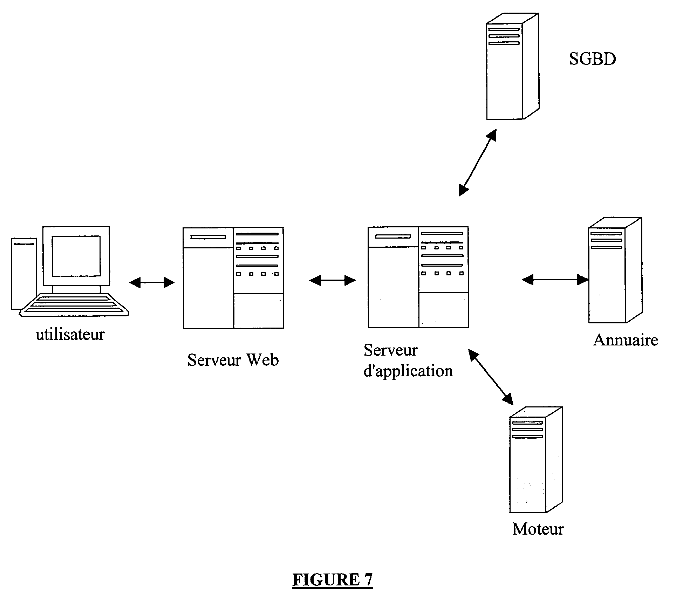

Avantageusement, les éléments de la figure 6 peuvent être répartis dans différentes machines reliées en réseau Internet et/ou autre comme on le voit sur la figure 7. L'utilisateur accède au serveur Web via Internet. Le serveur d'application comporte l'application de téléprocédure ainsi que le moteur de règles métier. Le moteur 6 pour exécuter l'application de téléprocédure est disposé dans une machine distincte, tout comme l'annuaire et le serveur de base de données. Une telle architecture permet d'optimiser le temps de traitement des opérations.

Bien sûr, l'invention n'est pas limitée aux exemples qui viennent d'être décrits et de nombreux aménagements peuvent être apportés à ces exemples sans sortir du cadre de l'invention.

## Revendications

1. Système de développement d'une application interactive, dite téléprocédure, pour la dématérialisation des procédures administratives, notamment en affichant des formulaires à renseigner et en gérant des formulaires renseignés, **caractérisé en ce que** le système comprend :
- un éditeur graphique interactif doté :
- d'un module fonctionnel apte à générer une application prototype à partir de données de spécifications fonctionnelles saisies, cette application prototype comprenant une définition de formulaires, une définition de scénario dit "workflow" interactif, une définition de règles métiers, une définition d'un modèle métier et une définition de mode d'interfaçage avec des éléments externes,
- d'un module technique apte à générer, à partir de la dite application prototype et de données de spécifications techniques saisies, l'application de téléprocédure, une application d'interfaçage et une application de gestion de la téléprocédure; et
- un moteur apte à exécuter lesdites applications de prototype, de téléprocédure, d'interfaçage et de gestion.

2. Système selon la revendication 1, **caractérisé en ce que** le module technique comprend des moyens pour personnaliser les codes des applications de téléprocédure et de gestion.

3. Système selon la revendication 1 ou 2, **caractérisé en ce que** le moteur consiste en une application modulaire dont le noyau comporte au moins :
- un composant de gestion du "workflow" interactif,
- un composant de gestion de formulaires,
- un composant de gestion de données métier, et
- un composant de gestion et d'exploitation de la téléprocédure et de l'interfaçage.

4. Système selon l'une quelconque des revendications précédentes, **caractérisé en ce qu'**il est intégré au sein d'un système d'information accessible via un réseau de communication de type Internet.

5. Système selon l'une quelconque des revendications précédentes, **caractérisé en ce que** les spécifications fonctionnelles et techniques sont établis en format XML respectant une grammaire XML Schema.

6. Système selon l'une quelconque des revendications précédentes, **caractérisé en ce que** le moteur comprend :
- des moyens de contrôles de données à partir d'un annuaire,
- des moyens d'horodatage,
- des moyens de notarisation et
- des moyens de signature électronique.

7. Système selon l'une quelconque des revendications précédentes, **caractérisé en ce que** la génération de codes est réalisée au sein d'une infrastructure informatique distribuée sur des réseaux informatiques.

8. Système selon la revendication 7, **caractérisé en ce que** l'infrastructure est de type J2EE.

9. Système selon la revendication 7, **caractérisé en ce que** l'infrastructure est de type .NET.

10. Système selon l'une quelconque des revendications précédentes, **caractérisé en ce que** les règles métiers sont définies en langage naturel.

11. Procédé de développement d'une application interactive, dite téléprocédure, pour la dématérialisation des procédures administratives, notamment en affichant des formulaires à renseigner et en gérant des formulaires renseignés, **caractérisé en ce que** :
- on élabore et on valide de façon itérative une application prototype à partir de données de spécifications fonctionnelles saisies, cette application prototype comprenant une définition de formulaires, une définition de scénario dit "workflow" interactif, une définition de règles métiers, une définition d'un modèle métier et une définition de mode d'interfaçage avec des éléments externes, puis
- on génère et on valide, à partir de la dite application prototype et de données de spécifications techniques saisies, l'application de téléprocédure, une application d'interfaçage et une application de gestion de la téléprocédure;
l'étape de validation consistant en l'exécution desdites applications par un moteur.
